# EUROPEAN PATENT SPECIFICATION

(11) **EP 1 106 973 B1**
(45) Date of publication and mention of the grant of the patent: **19.11.2014**
(21) Application number: 00126837.4
(22) Date of filing: 07.12.2000
(51) Int. Cl.: G01D 18/00, G01B 7/30

(54) **Angle detecting method**
Verfahren zur Drehwinkelerfassung
Procédé de détermination d'angle

(30) Priority: 08.12.1999 JP 34835799
(43) Date of publication of application: 13.06.2001
(73) Proprietor: DENSO CORPORATION, Kariya-city, Aichi-pref. 448-8661 (JP)
(72) Inventor: Kubota, Takamitsu, c/o DENSO CORPORATION, Kariya-city, Aichi-pref. 448-8661 (JP); Kamiya, Naoyuki, c/o DENSO CORPORATION, Kariya-city, Aichi-pref. 448-8661 (JP); Hagio, Hirofumi, c/o DENSO CORPORATION, Kariya-city, Aichi-pref. 448-8661 (JP); Hamaoka, Takashi, c/o DENSO CORPORATION, Kariya-city, Aichi-pref. 448-8661 (JP)
(74) Representative: TBK

(56) References cited:
- EP-A- 0 514 634
- EP-A- 0 733 881
- DE-A- 3 128 095
- FR-A- 1 509 388
- KONDRASKE ET AL.: "A Microprocessor-Based System for Adaptable Calibration and Linearization of Hall-Effect Position Sensors " IEEE TRANSACTIONS ON INSTRUMENTATION AND MEASUREMENT, vol. IM-35, no. 3, September 1986 (1986-09), pages 338-343, XP002162705 NEW-YORK,USA

## Description

### Background

The present invention relates to a regulating method for obtaining a desired output from a rotational angle sensor, and more particularly, to a regulating method for obtaining a desired output from a rotational angle sensor having a non-contact type sensing element which functions to detect a rotational angle of a rotary member.

As such, a contact type sensor is known using a sliding resistor and a sliding contact. With this conventional rotational angle sensor alone, a procedure is performed of regulating and confirming an output corresponding to a rotational angle during mounting the sensor to a throttle valve. In this final step, the sensor side is rotated relative to the throttle valve side by utilizing a long hole formed in the rotating direction. Thereafter both are fixed to each other.

In the above conventional sensor, however, it is necessary that mounting adjustment be done at least twice between the throttle valve side and the sensor side, thus giving rise to the problem that the number of adjusting steps is too many. Besides, the regulation of an output gradient gain is performed only in a discrete state of the sensor and the final mounting of the sensor to the throttle valve side is performed by a one-point adjustment, with the result that the rotational angle detecting accuracy is low. Further, in the case of a contact type sensor using a sliding resistor and a sliding contact, it is difficult to diminish variations in the printing accuracy (e.g., film thickness and width) during the fabrication of the resistor.

Document "A Microprocessor-Based System for Adaptable Calibration and Linearization of Hall-Effect Position Sensors" by Kondraske et al., IEEE TRANSACTIONS ON INSTRUMENTATION AND MEASUREMENT, vol. IM-35, no. 3, September 1986 (1986-09), pages 338-343, discloses a method for producing a calibrated, linear output from Hall-effect position sensors.

Document EP-A-0 514 634 discloses a process for correcting measurement errors of a measurement data acquisition system, in which analog measurement signals are supplied to a digital microprocessor-controlled measurement value analyser. The measurement errors are corrected during the analysis by means of a mathematical function, particularly operation, the parameters of which are determined by means of a comparison carried out at test points characteristic of the correction equation by means of test standards before the measuring device is first taken into operation and are stored in a non-volatile memory of the measurement data acquisition system.

Document DE-A-3 128 095 discloses a method for digital correction of the relationship between a digital input signal and a digital output signal, and a circuit arrangement to carry out this method. To correct the relationship between a digital input signal and a digital output signal, the digital input signal is combined with a digital correction value to form the digital output signal. For this purpose, the value range of the digital input signal is divided into segments of equal size. The correction values for the limits of the segments are stored in a read-only memory. The correction values for the digital input signal values which lie between two limits are determined by linear interpolation between the correction values of the adjacent limits. If the number of segments is selected as equal to 2ⁿ, n being a positive integer, the respective segment which is to be taken into consideration is obtained from the n most significant bits of the digital input signal.

Document EP-A-0 733 881 discloses a contactless angular position sensor for sensing the angular position of a pivotally mounted device about a predetermined pivot axis and including an angular magnet coaxially arranged relative to said pivot axis and defining predetermined arcuate portions of opposite magnetic polarities, coupling means for mechanically coupling said magnet to said pivotally mounted device, and a stationary magnetic sensing element within the plane of said circular magnet, said magnet is magnetized to have mutually opposite magnetic polarities along its inner circumference and said sending element is disposed within the central aperture of the magnet.

The present invention has been accomplished for solving the above-mentioned problems and it is an object of the invention to provide a rotational angle output regulating method capable of improving the output accuracy while decreasing the number of steps in regulating a rotational angle output.

This object is achieved by a method according to claim 1. Advantageous further developments are as set forth in the dependent claims.

According to a first aspect, in the rotational angle output regulating method according, a non-contact type sensing element (31, 32) for detecting a rotational angle of a rotary member by utilizing a magnetic force of a magnet (28) fixed to a shaft of the rotary member is mounted opposite to the magnet (28). Thereafter, the shaft portion (13) of the rotary member is rotated to adjust and temporarily fix the rotary member to a predetermined rotational angle, and an output value corresponding to the predetermined rotational angle of the rotary member is written into the sensing element (31, 32) from the exterior. Thus, the regulation of the output value corresponding to the rotational angle of the rotary member is made in only the final stage after mounting the non-contact type sensing element (31, 32). Hence, there is obtained an effect that the number of steps for output regulation is decreased.

According to a second aspect, there is one specific write point in writing the rotational angle output value of the rotary member into the non-contact type sensing element (31, 32) and a gradient corresponding thereto is preset and stored to calculate an output value at another point. Thus, output regulation is easy and output accuracy is improved.

According to a third aspect, there are two specific write points in writing rotational angle output values of the rotary member into the sensing element (31, 32) and all that is required is merely writing the rotational angle output values of the rotary member at the two specific points into the non-contact type sensing element (31, 32) in two steps repeatedly. A liner interpolation between the two points is made to calculate an output value at another point. Thus, there is obtained an effect that the output regulation is easy and the output accuracy is improved.

According to a fourth aspect, there are three specific write points in writing rotational angle output values of the rotary member into the non-contact type sensing element (31, 32) and all that is required is merely writing the rotational angle output values of the rotary member at the three specific points into the non-contact type sensing element (31, 32) in three steps repeatedly. A linear approximate interpolation among the three points is made to calculate an output value at another point. Thus, there is obtained an effect that the output regulation is easy and the output accuracy is improved.

According to a fifth aspect, there are three specific write points in writing rotational angle output values of the rotary member into the non-contact type sensing element (31, 32) and all that is required is merely writing the rotational angle output values at the three specific points into the non-contact type sensing element (31, 32) in three steps repeatedly. A linear interpolation between adjacent two points out of the three points is made to calculate an output value at another point, allowing easy output regulation and improved output accuracy.

According to a sixth aspect, the shaft portion (13) of the rotary member is a rotary shaft of a throttle valve in an internal combustion engine. One of write points in writing output values corresponding to throttle valve openings into the non-contact type sensing element (31, 32) is set particularly to a low opening position or a fully closed position, and all that is required is merely writing output values corresponding to throttle valve openings at write points including the low opening position into the non-contact type sensing element (31, 32) repeatedly by the number of write points.

According to a seventh aspect, the shaft portion (13) of the rotary member is a rotary shaft of a throttle valve in an internal combustion engine. One of the write points in writing output values corresponding to throttle valve openings into the non-contact type sensing element (31, 32) is set to a position rotated to an open side by a predetermined degree of throttle valve opening from an initial opening position. This is for specifying it as a fully closed position of the throttle valve opening, and all that is required is merely writing output values corresponding to throttle valve openings at write points including the set position into the non-contact type sensing element (31, 32) by the number of write points. As a result, easy output adjustment and improved output accuracy of an output value in the vicinity of the set fully closed position is accomplished.

According to an eighth aspect, the shaft portion (13) of the rotary member is a rotary shaft of a throttle valve in an internal combustion engine. One of write points in writing output values corresponding to throttle valve openings into the non-contact type sensing element (31, 32) is set to an initial opening position as a throttle valve opening position in an ON condition of an ignition switch in the internal combustion engine, the initial opening position being updated at every start-up of the internal combustion engine, and another output value of a throttle valve opening is corrected and calculated correspondingly to the initial opening position. Accordingly, for example, even if the initial opening position varies with the lapse of time, an output value from the non-contact type sensing element (31, 32) is corrected properly.

Further areas of applicability of the present invention will become apparent from the detailed description provided hereinafter. It should be understood that the detailed description and specific examples, while indicating preferred embodiments of the invention, are intended for purposes of illustration only, since various changes and modifications within the scope of the invention as defined in the appended claims will become apparent to those skilled in the art from this detailed description. In the drawings:
Fig. 1 is a cross-sectional view of an intake volume control apparatus for an internal combustion engine according to the present invention;
Fig. 2 is a plan view of an intake volume control apparatus for an internal combustion engine according to the present invention;
Fig. 3 is a schematic diagram showing an partially open position of a throttle valve in the intake volume control apparatus according to the present invention;
Fig. 4 is a schematic diagram showing a fully closed position of the throttle valve for an intake volume control apparatus for an internal combustion engine according to the present invention;
Fig. 5 is a schematic diagram showing a low opening position of the throttle valve in the intake volume control apparatus according to the present invention;
Fig. 6 is a schematic diagram showing a fully open position of the throttle valve in the intake volume control apparatus;
Fig. 7 is a graphical view of an output regulation by two-point write in a throttle opening sensor mounted to the intake volume control apparatus;
Fig. 8 is a diagram showing output regulation by three-point write in the throttle opening sensor for an intake volume control apparatus for an internal combustion engine according to the present invention;
Fig. 9 is a diagram illustrating a first modification of output regulation by three-point write in the throttle opening sensor for an intake volume control apparatus for an internal combustion engine according to the present invention;
Fig. 10 is a diagram illustrating a second modification of output regulation by three-point write in the throttle opening sensor for an intake volume control apparatus for an internal combustion engine according to the present invention; and
Fig. 11 is a diagram illustrating a modification of output regulation by two-point write in the throttle opening sensor for an intake volume control apparatus for an internal combustion engine according to the present invention.

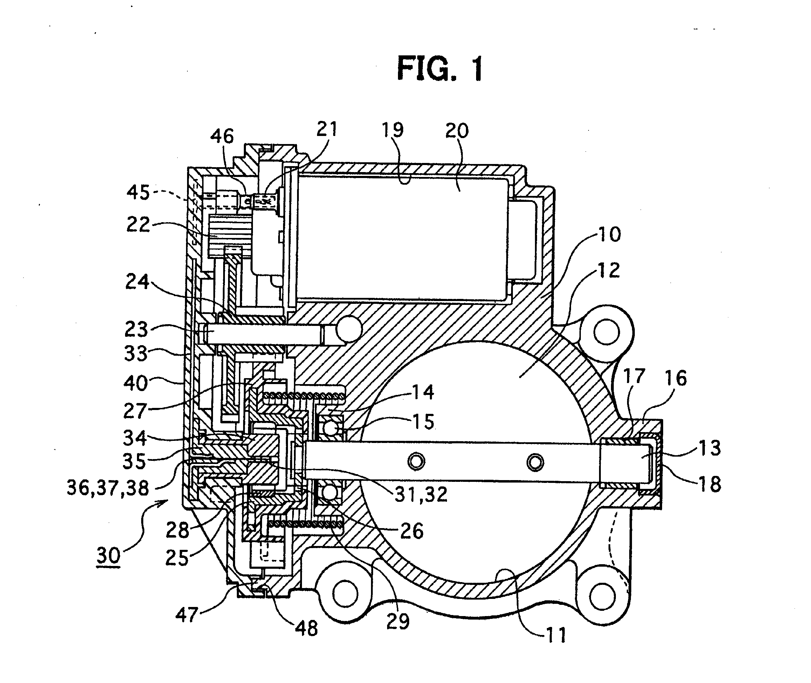

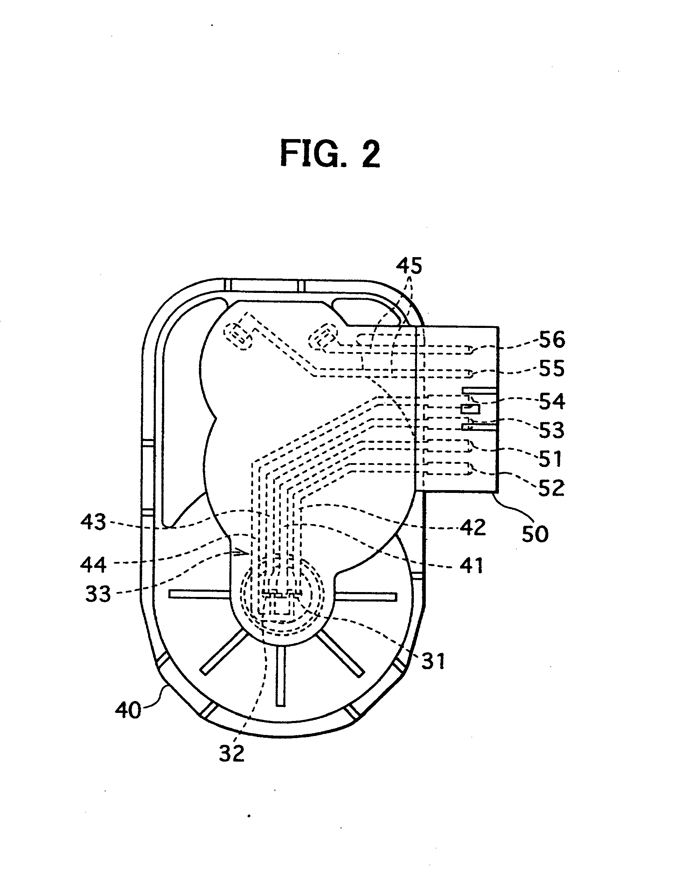

Fig. 1 is a sectional view showing an entire construction of an intake volume control apparatus for an internal combustion engine to which a rotational angle output regulating method according to an embodiment of the present invention is applied. Fig. 2 is a left side view of Fig. 1.

In Fig. 1, the intake volume control apparatus for an internal combustion engine mainly comprises a throttle body 10 in which an intake passage 11 to the internal combustion engine (not shown) is formed, a generally disc-like throttle valve 12 fixed rotatably onto a rotary shaft 13 within the intake passage 11, an electric motor 20 geared to the rotary shaft 13, and a throttle opening sensor 30 for detecting the degree of opening of the throttle valve 12 as a rotational angle of the throttle valve. An output signal provided from the throttle opening sensor 30 is fed to an ECU (Electronic Control Unit) (not shown), in which a drive signal is obtained by calculation according to an operating condition of the internal combustion engine. With the resulting rotation of the electric motor 20, the throttle valve 12 is controlled to a desired degree of opening.

The throttle body 10, which is formed by aluminum die casting, is fixed to an intake manifold (not shown) in the internal combustion engine, using bolts or the like. One end of the throttle valve 12 is carried rotatably on a ball bearing 15 which is held by a bearing holder portion 14 of the throttle body 10. An opposite end of the throttle valve is carried rotatably on a thrust bearing 17 which is held by a bearing holder portion 16 of the throttle body 10. A cap 18 is fitted in the bearing holder portion 16 of the throttle body 10. The throttle valve 12 is rotated in the intake passage 11 of the throttle body 10 and the intake volume (the amount of air to be introduced) into the internal combustion engine is adjusted by the resulting gap.

The electric motor 20 is accommodated within a motor receptacle portion 19 formed in the throttle body 10. A motor energizing terminal 21 is projected from the electric motor 20 and a pinion gear 22 is fitted on a front end of an output shaft of the motor. A rotor 25 is fixed onto one end of the rotary shaft 13 of the throttle valve 12 and a resin gear 27 is insert-molded to the rotor 25. A cylindrical permanent magnet 28 which constitutes a throttle opening sensor 30 is bonded to an inner peripheral surface of the rotor 25. The pinion gear 22 is in mesh with the resin gear 27 via an intermediate reduction gear 24 adapted to rotate about a fixed shaft 23 which is fixed to the throttle body 10. On an outer periphery side of the resin gear 27, integral with the rotor 25, is mounted a coiled return spring 29 for restoring the throttle valve 12 to an initial opening position thereof via the rotary shaft 13 when an ignition switch (not shown) is turned OFF to stop the supply of electric current to the electric motor 20. In the rotor 25, a positioning hole 26 is aligned with and fixed to an idle position with respect to the rotary shaft 13.

The throttle opening sensor 30 is made up of a cylindrical permanent magnet 28 as a magnetic field generating source, two Hall ICs 31 and 32 as dual system, non-contact type sensing elements molded integrally with a sensor cover 40, a lead frame 33 having an electrically conductive thin metallic sheet for electrical connection between the Hall ICs 31, 32 and an external ECU, and a split type stator 34 formed of a magnetic material which concentrates a magnetic flux to the Hall ICs 31 and 32.

The two Hall ICs 31 and 32 are disposed in opposition to an inner periphery side of the permanent magnet 28 so that, upon occurrence of magnetic fields of N or S pole on their sensing surfaces, there are generated electromotive forces [(+) potential for N-pole magnetic field or (-) potential for S-pole field] sensitively to the generated magnetic fields. The Hall ICs 31 and 32 used are arranged side by side in 180° opposite directions.

For example, as shown in Fig. 2, the lead frame 33 is formed by an electrically conductive thin copper sheet and is composed of a signal input terminal (VDD) 41 to which is applied a battery voltage of 5[V], output take-out terminals (OUT1, OUT2) 42 and 43 for taking out throttle opening signals from the throttle valve 12, and an earth terminal (GND) 44. A connection between leads of the two Hall ICs 31 and 32, which are a signal input lead (VDD) 36, an earth lead (GND) 37 and output take-out leads (OUT1, OUT2) 38, and the lead frame 33 is coated with a connection holder 35 formed of a thermoplastic resin such as PBT.

The stator 34, which is split in two, is fitted and fixed onto an outer periphery side of the connection holder 35 and a predetermined gap is ensured between the stator 34 and the two Hall ICs 31, 32.

The sensor cover 40, which closes an open side of the throttle body 10, is a resin-molded cover produced by molding a thermoplastic resin such as PBT which is light weight, easy to manufacture and inexpensive and which insulates between terminals of the throttle opening sensor electrically. The sensor cover 40 is formed with a concave portion 48 for engagement with a convex portion 47 formed on the open side of the throttle body 10 and it is combined with the throttle body 10 with a clip (not shown). Thus, since the convex portion 47 of the throttle body 10 and the concave portion 48 of the sensor cover 40 are fitted together, a positional relation between the two Hall ICs 31, 32 disposed and fixed on the sensor cover 40 side and the permanent magnet 28 disposed and fixed on the inner periphery side of the rotor 25 which rotates integrally with the rotary shaft 13 of the throttle valve 12 journalled rotatably in the throttle body 10 is compensated.

As shown in Fig. 2, a connector portion 50 is formed by molding integrally with a side face of the sensor cover 40 and it is composed substantially of tip portions 51-54 of the signal input terminal 41, output take-out terminals 42, 43 and earth terminal 44 formed on the lead frame 33 side, and tip portions 55 and 56 of motor current-conducting terminals 45 of the electric motor 20. Motor connecting terminals 46 are integrally bonded to opposite ends of the motor current-conducting terminals 45, and in a combined state of the throttle body 10 and the sensor cover 40 the motor energizing terminal 21 of the electric motor 20 is connected to the motor current-conducting terminals 45 via the motor connecting terminals 46.

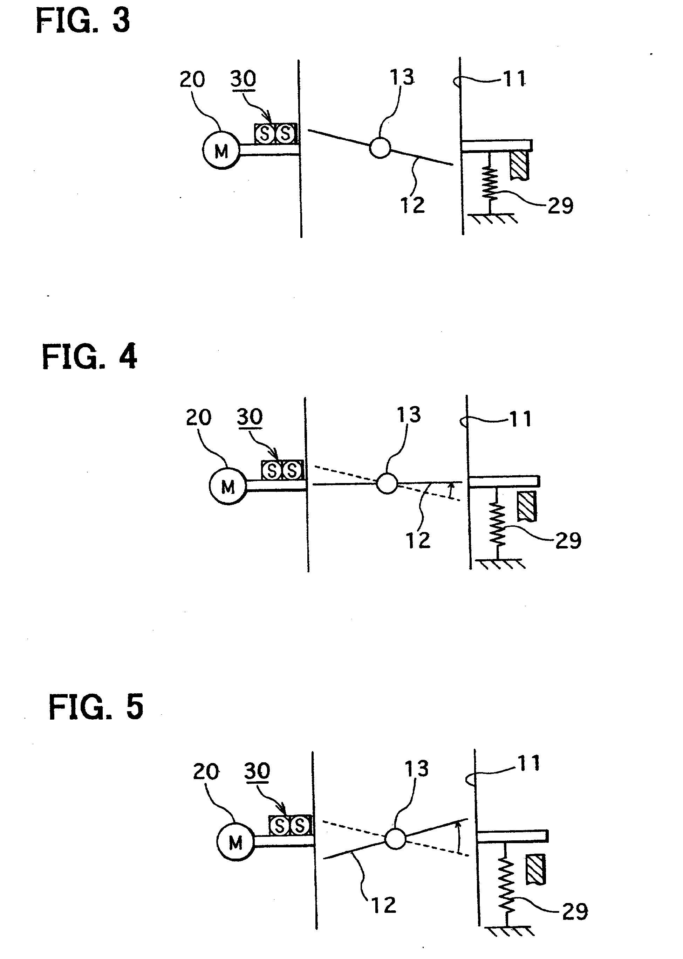

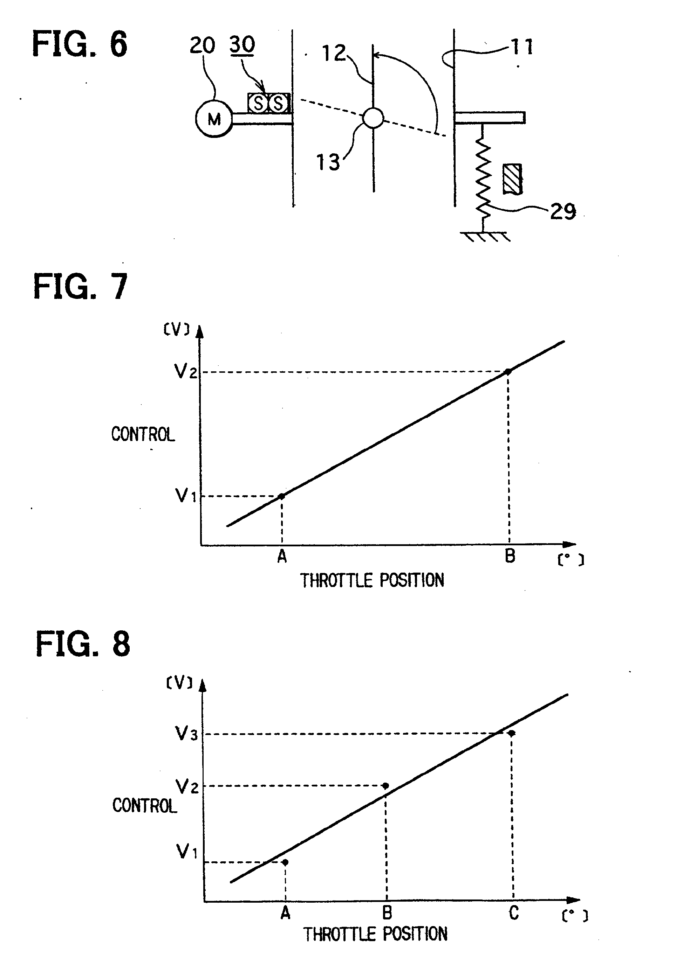

Figs. 3, 4, 5, and 6 are schematic diagrams showing specific opening positions of the throttle valve 12 in the intake volume control apparatus for an internal combustion engine described above. The intake volume control apparatus illustrated in those figures is of a so-called overturn type in which the throttle valve 12 is opened and closed in the range from a fully open position (90° ) (Fig. 6) to an initial opening position (-10° ) (Fig. 3, hereinafter referred to simply as the "partially open position") after passing a fully closed position (0° ) (Fig. 4).

Fig. 3 shows a state in which the supply of an electric current to the electric motor 20 is stopped, the rotary shaft 13 of the throttle valve 12 is restored into abutment against a stopper (hatched area) on the throttle body 10 side, and the throttle valve 12 is open. Fig. 4 shows a state in which the throttle valve 12 is in the fully closed position to minimize the amount of air introduced into the internal combustion engine. Fig. 5 shows a state in which the throttle valve 12 is in a low opening position to provide an intake volume for idling of the internal combustion engine. Further, Fig. 6 shows a state in which the throttle valve 12 is in the fully open position as a specific opening position thereof to maximize the amount of air introduced into the internal combustion engine.

Now, with reference to Figs. 3, 4, 5, and 6 as necessary, the following description is provided about adjusting the output of the throttle opening sensor mounted to the intake volume control apparatus for an internal combustion engine in this embodiment. First, a description will be given about adjusting the output of the throttle opening sensor 30 by two-point write with reference to Figs. 1 and 7.

In the completely mounted state of the intake volume control apparatus for an internal combustion engine shown in Fig. 1, an encoder (not shown) is connected to a slit portion (not shown) of the rotary shaft 13 when the cap 18 is removed from the throttle body 10. The rotary shaft 13 is rotated to give throttle openings [° ] at two specific points (points A and B) and is fixed temporarily at each point. Predetermined regulated outputs V1 and V2 [V] in the Hall ICs 31 and 32 corresponding to the throttle openings at points A and B are written.

More specifically, the regulated outputs V1 and V2 as write signals are written from an externally connected program board (not shown) using the signal input terminal (VDD) 41 and output take-out terminal (OUT1) 41 for the Hall IC 31 and using the signal input terminal (VDD) 41 and output take-out terminal (OUT2) 43 for the Hall IC 32. At the same time, write processings such as temperature characteristic correction, gain correction, and offset correction are performed. Thereafter, the encoder and the program board are removed and the cap 18 is fitted in the throttle body 10. The output regulating work is now over.

Thus, all that is required for the output regulation by two-point write in the throttle opening sensor 30 is merely turning the rotary shaft 13 to the throttle openings at two specific points, subsequent temporary fixing, and writing write signals corresponding to those points.

Based on the regulated outputs V1 and V2 at the two specific points (points A and B) thus written, an output value from the throttle opening sensor 30 corresponding to the throttle opening at another point is calculated by a linear interpolation, as shown in Fig. 7. By setting the two specific points (A and B) in the above throttle openings to the fully closed position shown in Fig. 4 and the fully open position shown in Fig. 6, respectively, it is possible to calculate an appropriate output value for the throttle opening at another point.

Thus, the rotational angle output regulating method of this embodiment comprises a first step of mounting Hall ICs 31 and 32 (non-contact type sensing elements for detecting the degree of opening of the throttle valve 12 by utilizing the magnetic force of the permanent magnet 28) opposite to the permanent magnet which rotates integrally with the rotary shaft 13, which is a rotating shaft of throttle valve 12. A subsequent second step includes adjusting the degree of opening of the throttle valve 12 to a predetermined value with an encoder connected to the rotary shaft 13 and fixing the valve to that position temporarily. A third step includes writing an output value corresponding to the temporarily fixed, predetermined degree of opening of the throttle valve 12 into the Hall ICs 31 and 32 through a program board connected to the signal input terminal (VDD) 41 and output take-out terminals (OUT1) 42 and (OUT2) 43.

According to the rotational angle output regulating method of this embodiment, when there are two specific write points of output values corresponding to predetermined throttle positions of the throttle valve 12, the second and third steps are repeated twice successively and an output value at another point is calculated by a linear interpolation between the two points thus written.

Specifically, after the Hall ICs 31 and 32 are mounted in opposition to the permanent magnet 28, the rotary shaft 13 is rotated to adjust the throttle valve 12 to a predetermined throttle opening, the throttle valve is temporarily fixed to this position, and an output value corresponding to this throttle opening is written into the Hall ICs 31 and 32 from the exterior. Thus, the output value writing operation for the throttle valve opening is in only the final stage after mounting the Hall ICs 31 and 32.

When there are two specific write points in writing throttle opening output values of the throttle valve 12 into the Hall ICs 31 and 32, all that is required for output regulation is merely writing the throttle opening output values of the throttle valve at the two specific points into the Hall ICs 31 and 32 in two steps repeatedly, and an output value at another point is calculated by a linear interpolation between the two points. Thus, the output regulation is easy and it is possible to improve the output accuracy.

When there is one specific write point in writing an output value corresponding the throttle opening of the throttle valve 12 into the Hall ICs 31 and 32, an output value at another point can be calculated by presetting and storing a gradient corresponding thereto, whereby the same effect as above can be expected.

Now, with reference to Figs. 1 and 8, the following description is provided about output regulation by three-point write in the throttle opening sensor 30 mounted to the intake volume control apparatus for an internal combustion engine according to this embodiment.

When the intake volume control apparatus for an internal combustion engine, shown in Fig. 1, is mounted and with the cap 18 removed from the throttle body 10, an encoder (not shown) is connected to a slit portion (not shown) of the rotary shaft 13. Then, the rotary shaft 13 is rotated to provide throttle openings [° ] of the throttle valve 12 of three specific points (A, B, C) and is fixed temporarily at each point. Predetermined regulated outputs V1, V2, and V3 [V] corresponding to the throttle openings at the three points A, B, and C, respectively, are written in the Hall ICs 31 and 32. In this case, the regulated outputs V1, V2, and V3 as write signals are written through an externally connected program board (not shown) using the signal input terminal (VDD) 41 and output take-out terminal (OUT1) 41 for the Hall IC 31 and using the signal input terminal (VDD) 41 and output take-out terminal (OUT2) 43 for the Hall IC 32. At the same time, such write processings as temperature characteristic correction, gain correction, and offset correction are carried out. Thereafter, the encoder and the program board are removed and the cap 18 is fitted in the throttle body 10. The output regulating work is now over.

Thus, all that is required in the output regulating work by three-point write in the throttle opening sensor 30 is merely rotating the rotary shaft 13 successively to the throttle valve openings at three specific points, fixing it to each of those throttle openings temporarily, and writing write signals corresponding to those points. Based on the regulated outputs V1, V2, and V3 at the three specific points (A, B, C) thus written, an output value from the throttle opening sensor 30 at another point is calculated by a linear approximate interpolation, as shown in Fig. 8. If the three specific points (A, B, C) as throttle valve positions are set to, for example, the partially open position shown in Fig. 3, the fully closed position shown in Fig. 4, and the fully open position shown in Fig. 6, respectively, an appropriate output value corresponding to the throttle valve opening at another point can be calculated.

Thus, according to the rotational angle output regulating method of this embodiment, when there are three specific write points of output values corresponding to predetermined throttle openings of the throttle valve 12, the second and third steps are repeated three times successively. The second step involves adjusting the throttle valve 12 to predetermined throttle openings through an encoder, for example, connected to the rotary shaft 13 and fixing it to the throttle openings temporarily. The third step involves writing output values corresponding to the predetermined throttle openings of the throttle valve 12 fixed temporarily in the second step into the Hall ICs 31 and 32 using a program board connected to the signal input terminal (VDD) 41 and output take-out terminals (OUT1) 42 and (OUT2) 43. An output value at another point is calculated by a linear approximate interpolation among the three points thus written.

That is, the output regulating work performed where there are three write points in writing throttle opening output values of the throttle valve 12 into the Hall ICs 31 and 32 merely comprises writing the throttle opening output values at the three specific points into the Hall ICs 31 and 32 in three steps repeatedly. Subsequent linear approximate interpolation is used among the three points to calculate an output value at another point.

Thus, the output regulation is easy and it is possible to improve the output accuracy.

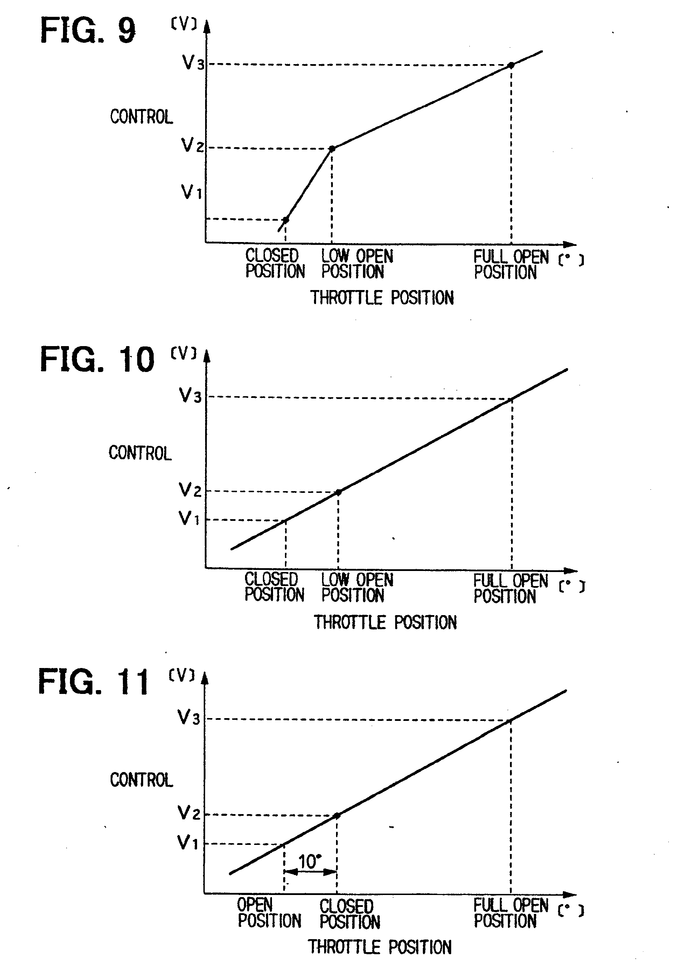

Next, with reference to Figs. 1 and 9, a first modification of the present invention is provided. In the completely mounted state of the intake volume control apparatus for an internal combustion engine shown in Fig. 1 and with the cap 18 removed from the throttle body 10, an encoder (not shown) is connected to a slit portion (not shown) of the rotary shaft 13. Then, the rotary shaft 13 is rotated to give throttle openings [° ] at three specific points [fully closed position (see Fig. 4), low opening (idling) position (see Fig. 5), and fully open position (see Fig. 6) of the throttle valve 12, and is fixed temporarily to each point. Predetermined regulated outputs V1, V2, and V3 [V] corresponding respectively to the throttle openings at the fully closed position, low opening position, and fully open position are written into the Hall ICS 31 and 32. In this case, the regulated outputs V1, V2, and V3 as write signals are written through an externally connected program board using the signal input terminal (VDD) 41 and output take-out terminal (OUT1) 42 for the Hall IC 31 and using the signal input terminal (VDD) 41 and output take-out terminal (OUT2) 43 for the Hall IC 32. At the same time, there are write processings as temperature characteristic correction, gain correction, and offset correction. Thereafter, the encoder and the program board are removed and the cap 18 is fitted in the throttle body 10 to complete the output regulating work.

Thus, the output regulating work by three-point write in the throttle opening sensor 30 merely comprises successively rotating and temporarily fixing the rotary shaft 13 to each of the throttle openings at the three specific points and writing write signals corresponding to these points. Based on the regulated outputs V1, V2, and V3 at the three specific points (fully closed position, low opening position, and fully open position) thus written, an output value from the throttle opening sensor 30 at another point is calculated by a linear interpolation between two adjacent points, as shown in Fig. 9.

Thus, in the rotational angle output regulating method according to this modification, when there are three specific write points corresponding to predetermined throttle openings of the throttle valve 12, the throttle valve is adjusted to predetermined throttle openings through an encoder connected to the rotary shaft 13. Then the second and third steps are repeated successively. The second step being a temporary fixing step. The third step involves writing output values corresponding to the predetermined throttle openings of the throttle valve 12 fixed temporarily in the second step into the Hall ICs 31 and 32 through a program board connected to the signal input terminal (VDD) 41 and output take-out terminals (OUT1) 42 and (OUT2) 43. An output value at another point is calculated by linear interpolation between adjacent points out of the three points.

The output regulating work performed where there are three specific write points in writing output values corresponding to throttle openings of the throttle valve 12 into the Hall ICs 31 and 32 merely comprises writing the throttle opening output values at the three specific points into the Hall ICs 31 and 32 in three steps repeatedly. An output value at another point is then calculated by interpolation between two adjacent points out of the three points.

With reference to Figs. 1 and 10, the following description is provided for a second modification of the present invention. In the completely mounted state of the intake volume control apparatus for an internal combustion engine shown in Fig. 1 and with the cap 18 removed from the throttle body 10, an encoder (not shown) is connected to a slit portion (not shown) of the rotary shaft 13. The rotary shaft 13 is rotated to give throttle openings [° ] at three specific points of the throttle valve 12 of which one point is the low opening (idling) position (see Fig. 5), and is fixed to each point temporarily. Predetermined regulated outputs V1, V2, and V3 [V] corresponding to throttle openings at the three specific points including the low opening position are written into the Hall ICs 31 and 32. In this case, the regulated outputs V1, V2, and V3 as write signals are written through an externally connected program board (not shown) using the signal input terminal (VDD) 41 and output take-out terminal (OUT1) 42 for the Hall IC 31 and using the signal input terminal (VDD) 41 and output take-out terminal (OUT2) 43 for the Hall IC 32. At the same time, there are performed such write processings as temperature characteristic correction, gain correction, and offset correction. Thereafter, the encoder and the program board are removed and the cap 18 is fitted in the throttle body 10 to complete the output regulating work.

As noted above, the output regulating work by three-point write in the throttle opening sensor 30 merely comprises turning the rotary shaft 13 successively to throttle openings at three specific points including the low opening position, fixing it to each point temporarily, and writing write signals corresponding to those points. Then, based on regulated outputs V1, V2, and V3 at the three specific points including the low opening position thus written, an output value from the throttle opening sensor 30 at another point is calculated by a linear interpolation between two adjacent points.

Thus, in the rotational angle output regulating method according to this modification, the shaft portion of the rotary member is the rotary shaft 13 of the throttle valve 12 in the internal combustion engine and one specific write point out of write points of output values corresponding to predetermined throttle openings of the throttle valve is set to the low opening position of the valve.

The output regulating work performed in setting one specific write point out of output value write points to the low opening position merely comprises writing output values corresponding to throttle valve openings at write points including the low opening position into the Hall ICs 31 and 32 repeatedly by the number of write points. For example, by a linear interpolation between two adjacent points out of the write points there is calculated an output value at another point. Thus, the output regulation is easy and it is possible to improve the output accuracy of output values in the vicinity of the set low opening position.

Next, with reference to Figs. 1 and 11, a description will be given below about a modification of the output regulation by two-point write in the throttle opening sensor 30 mounted to the intake volume control apparatus for an internal combustion engine according to the above embodiment.

In the completely mounted state of the intake volume control apparatus for an internal combustion engine shown in Fig. 1 and with the cap 18 removed from the throttle body 10, an encoder (not shown) is connected to a slit portion (not shown) of the rotary shaft 13. Then, the rotary shaft 13 is turned to two specific throttle openings [° ] of the throttle valve 12. For example, at the partially open position (see Fig. 3) and the fully closed position (see Fig. 4) shifted 10 [° ] to the open side from the partially open position, the shaft is fixed to each point temporarily. Predetermined regulated outputs V1 and V2 [V] corresponding to the throttle openings at those two points are written into the Hall ICs 31 and 32. In this case, the regulated outputs V1 and V2 as write signals are written through an externally connected program board (not shown) using the signal input terminal (VDD) 41 and output take-out terminal (OUT1) 42 for the Hall IC 31 and using the signal input terminal (VDD) 41 and output take-out terminal (OUT2) 43 for the Hall IC 32. At the same time, write processings are performed such as temperature characteristic correction, gain correction, and offset correction. Thereafter, the encoder and the program board are removed and the cap 18 is fitted in the throttle body 10 to complete the output regulating work.

As noted above, the output regulating work by two-point write of the throttle opening sensor 30 merely comprises turning the rotary shaft 13 successively to the throttle openings at the two specific points, fixing it to each point temporarily, and writing the write signals corresponding to the points. Based on the regulated outputs V1 and V2 at the two specific points (the partially open position and the fully closed position) thus written, an output value from the throttle opening sensor 30 corresponding to the throttle opening at another point is calculated by a linear interpolation between the two points.

Thus, in the rotational angle output regulating method according to this modification, the shaft portion of the rotary member is the rotary shaft 13 of the throttle valve 12 in the internal combustion engine and one specific point out of write points of output values corresponding to throttle openings of the throttle valve 12 is set, as the fully closed position of the throttle valve opening, a position returned to the open side by a predetermined throttle opening from the partially open position which is a mechanical stopper position past the minimum flow position.

That is, the output regulating work performed when setting one of the output value write points to a position turned to the open side by a predetermined throttle opening from the partially open position merely comprises writing output values corresponding to throttle openings of the throttle valve 12 at plural specific points including the position into the Hall ICs 3 and 32 in plural steps repeatedly. For example, a linear interpolation is made between two adjacent points out of the plural points to calculate an output value at another point. Consequently, output regulation is easy and it is possible to improve the output accuracy of an output value in the vicinity of a position rotated to the open side by a predetermined throttle opening from the partially open position.

Although in the above embodiment and modifications the present invention is applied to the throttle opening sensor mounted to the intake volume control apparatus for an internal combustion engine, this constitutes no limitation in practicing the present invention. The invention is also applicable to any other sensors insofar as the sensors are for detecting a rotational angle of a rotary member.

One specific write point may be set to the partially open position of the throttle valve opening when the ignition switch is on and the partially open position may be used as a learning position. By so doing, the partially open position of the throttle valve opening is updated at every start-up of the internal combustion engine and another output value of a throttle opening is corrected and calculated corresponding to the partially open position. Therefore, even if the partially open position varies with the lapse of time, output values from the Hall ICs 31 and 32 in the throttle opening sensor 30 can be properly corrected.

While the above-described embodiments refer to examples of usage of the present invention, it is understood that the present invention may be applied to other usage, modifications and variations of the same within the scope of the appended claims, and is not limited to the disclosure provided herein.

## Claims

1. A rotational angle output regulating method comprising the steps of:
a. mounting a non-contact type sensing unit (30) comprising two Hall-ICs (31, 32) being arranged side by side in 180° opposite directions and a magnet (28)wherein the two Hall-ICs (31, 32) are disposed in opposition to an inner periphery side of said magnet (28), said magnet (28) rotating integrally with a shaft portion (13) of a rotary member, the non-contact type sensing unit (30) detecting a rotational angle of the rotary member;
b. rotating the shaft portion (13) by a predetermined rotational angle for adjusting the rotary member to one, two or three specific point or points (A, B) by using an encoder connected to the shaft portion and temporarily fixing the rotary member at the one, two or three specific point or points (A, B);
c. writing an output value from an externally connected program board corresponding to each of the one, two or three specific point or points (A, B) of the rotary member into the Hall-ICs (31, 32);
d. removing the encoder and the program board; and
e. calculating an output value of the non-contact type sensing unit (30) at a new point corresponding to another rotation of the shaft portion (13) based on each of the output values corresponding to each of the temporarily fixed one, two or three specific point or points (A, B).

2. A rotational angle output regulating method according to claim 1, wherein the output value at the new point is calculated based on the output value written into the Hall-IC (31, 32) and a gradient preset correspondingly thereto when there is one specific point (A, B) to which the output value corresponds.

3. A rotational angle output regulating method according to claim 1, wherein:
step b. and step c. are repeated twice successively to generate and write output values corresponding to two temporarily fixed specific points (A, B); and
the output value at the new point is calculated based on a linear interpolation between the two temporarily fixed specific points (A, B).

4. A rotational angle output regulating method according to claim 1, wherein:
step b. and step c. are repeated three times successively to generate and write output values corresponding to three temporarily fixed specific points (A, B, C); and
the output value at the new point is calculated based on a linear approximate interpolation based on the three temporarily fixed specific points.

5. A rotational angle output regulating method according to claim 1, wherein step b. and step c. are repeated three times successively to generate and write output values corresponding to three temporarily fixed specific points (A, B, C); and
the output value at the new point is based on a linear interpolation made between respective two adjacent temporarily fixed specific points out of the three temporarily fixed specific points.

6. A rotational angle output regulating method according to any one of claims 2 to 5, wherein the shaft portion (13) of the rotary member is a rotary shaft of a throttle valve in an internal combustion engine;
one of the temporarily fixed one, two or three specific point or points is set to a low opening position or a fully closed position of the throttle valve.

7. A rotational angle output adjusting method according to any one of claims 2 to 5, wherein:
the shaft portion (13) of the rotary member is a rotary shaft of a throttle valve in an internal combustion engine;
one of the temporarily fixed one, two or three specific point or points is set to a fully closed position of the throttle valve and returned to an open side by a predetermined degree of opening of the throttle valve from an initial opening position as a mechanical stopper position past a minimum flow position.

8. A rotational angle output regulating method according to any of claims 2 to 5, wherein the shaft portion (13) of the rotary member is a rotary shaft of a throttle valve in an internal combustion engine; and
one of the temporarily fixed one, two or three specific point or points is set to an initial opening position of the throttle valve in an ON condition of an ignition switch in the internal combustion engine, the initial opening position serving as a learning position, wherein the initial opening position is updated at every start-up of the internal combustion engine, wherein the output value at the new point corresponding to another rotation of the shaft portion (13) is corrected and calculated corresponding to the initial opening position.

## Patentansprüche

1. Drehwinkelausgaberegulierverfahren mit den Schritten:
a. Anbringen einer Erfassungseinheit eines kontaktfreien Typs (30), die zwei Hall-IC (31, 32), die Seite an Seite in um 180° entgegengesetzte Richtungen angeordnet sind, und einen Magneten (28) umfasst, wobei die zwei Hall-IC (31, 32) auf einer Innenumfangsseite des Magneten (28) entgegengesetzt angeordnet sind, wobei der Magnet (28) sich integral mit einem Wellenabschnitt (13) eines Drehelements dreht, wobei die Erfassungseinheit des kontaktfreien Typs (30) einen Drehwinkel des Drehelements erfasst;
b. Drehen des Wellenabschnitts (13) um einen vorbestimmten Drehwinkel zur Justierung des Drehelements auf einen spezifischen Punkt, zwei spezifische Punkte oder drei spezifische Punkte (A, B) unter Verwendung einer Kodiereinrichtung, die mit dem Wellenabschnitt verbunden ist, und zeitweises Fixieren des Drehelements bei dem einen spezifischen Punkt oder den zwei spezifischen Punkten oder den drei spezifischen Punkten (A, B);
c. Schreiben eines Ausgabewerts von einer extern angeschlossenen Programmplatine entsprechend jedem des einen spezifischen Punkts, der zwei spezifischen Punkte oder der drei spezifischen Punkte (A, B) des Drehelements in die Hall-IC (31, 32);
d. Entfernen der Kodiereinrichtung und der Programmplatine; und
e. Berechnen eines Ausgabewerts der Erfassungseinheit des kontaktfreien Typs (30) bei einem neuen Punkt entsprechend einer anderen Drehung des Wellenabschnitts (13) auf der Grundlage jedes der Ausgabewerte entsprechend jedem des zeitweise fixierten einen spezifischen Punkts, der zeitweise fixierten zwei spezifischen Punkte oder der zeitweise fixierten drei spezifischen Punkte (A, B).

2. Drehwinkelausgaberegulierverfahren nach Anspruch 1, wobei der Ausgabewert bei dem neuen Punkt auf der Grundlage des Ausgabewerts, der in die Hall-IC (31, 32) geschrieben wird, und eines Gradienten berechnet wird, der entsprechend hierzu voreingestellt wird, wenn es einen spezifischen Punkt (A, B) gibt, dem der Ausgabewert entspricht.

3. Drehwinkelausgaberegulierverfahren nach Anspruch 1 wobei:
Schritt b. und Schritt c. zweimal aufeinanderfolgend wiederholt werden, um Ausgabewerte entsprechend zwei zeitweise fixierten spezifischen Punkten (A, B) zu erzeugen und zu schreiben; und
der Ausgabewert bei dem neuen Punkt auf der Grundlage einer linearen Interpolation zwischen den zwei zeitweise fixierten spezifischen Punkten (A, B) berechnet wird.

4. Drehwinkelausgaberegulierverfahren nach Anspruch 1 wobei:
Schritt b. und Schritt c. dreimal aufeinanderfolgend wiederholt werden, um Ausgabewerte entsprechend drei zeitweise fixierten spezifischen Punkten (A, B, C) zu erzeugen und zu schreiben; und
der Ausgabewert bei dem neuen Punkt auf der Grundlage einer linearen Näherungsinterpolation auf der Grundlage der drei zeitweise fixierten spezifischen Punkte berechnet wird.

5. Drehwinkelausgaberegulierverfahren nach Anspruch 1, wobei Schritt b. und Schritt c. dreimal aufeinanderfolgend wiederholt werden, um Ausgabewerte entsprechend drei zeitweise fixierten spezifischen Punkten (A, B, C) zu erzeugen und zu schreiben; und
der Ausgabewert bei dem neuen Punkt auf einer linearen Interpolation beruht, die zwischen jeweils zwei benachbarten zeitweise fixierten spezifischen Punkten aus den drei zeitweise fixierten spezifischen Punkten ausgeführt wird.

6. Drehwinkelausgaberegulierverfahren nach einem der Ansprüche 2 bis 5, wobei der Wellenabschnitt (13) des Drehelements eine Drehwelle eines Drosselventils in einer Brennkraftmaschine ist;
einer des zeitweise fixierten einen spezifischen Punkts, der zeitweise fixierten zwei spezifischen Punkte oder der zeitweise fixierten drei spezifischen Punkte auf eine niedrige Öffnungsposition oder eine vollständig geschlossene Position des Drosselventils eingestellt ist.

7. Drehwinkelausgabejustierverfahren nach einem der Ansprüche 2 bis 5, wobei:
der Wellenabschnitt (13) des Drehelements eine Drehwelle eines Drosselventils in einer Brennkraftmaschine ist;
einer des zeitweise fixierten einen spezifischen Punkts, der zeitweise fixierten zwei spezifischen Punkte oder der zeitweise fixierten drei spezifischen Punkte auf eine vollständig geschlossene Position des Drosselventils eingestellt ist und zu einer offenen Seite um einen vorbestimmten Öffnungsgrad des Drosselventils von einer Anfangsöffnungsposition als eine mechanische Anschlagposition nach einer Minimalströmungsposition zurückgeführt wird.

8. Drehwinkelausgaberegulierverfahren nach einem der Ansprüche 2 bis 5, wobei der Wellenabschnitt (13) des Drehelements eine Drehwelle eines Drosselventils in einer Brennkraftmaschine ist; und
einer des zeitweise fixierten einen spezifischen Punkts, der zeitweise fixierten zwei spezifischen Punkte oder der zeitweise fixierten drei spezifischen Punkte auf eine Anfangsöffnungsposition des Drosselventils in einem Einschaltzustand eines Zündschalters in der Brennkraftmaschine eingestellt ist, wobei die Anfangsöffnungsposition als eine Lernposition dient, wobei die Anfangsöffnungsposition bei jedem Anlassen der Brennkraftmaschine aktualisiert wird, wobei der Ausgabewert bei dem neuen Punkt entsprechend einer anderen Drehung des Wellenabschnitts (13) entsprechend der Anfangsöffnungsposition korrigiert und berechnet wird.

## Revendications

1. Procédé de régulation de sortie d'angle de rotation comprenant les étapes suivantes :
a. montage d'une unité de détection de type sans contact (30) comprenant deux circuits intégrés à effet Hall (31, 32) placés côte à côte dans des directions opposées de 180° et un aimant (28) dans lequel les deux circuits intégrés à effet Hall (31, 32) sont disposés en opposition à un côté de la périphérie interne dudit aimant (28), ledit aimant (28) tournant d'un seul tenant avec une partie d'arbre (13) d'un élément rotatif, l'unité de détection de type sans contact (30) détectant un angle de rotation de l'élément rotatif ;
b. rotation de la partie d'arbre (13) selon un angle de rotation prédéterminé pour régler l'élément rotatif à un, deux ou trois point ou points spécifique(s) (A, B) en utilisant un codeur connecté à la partie d'arbre et en fixant temporairement l'élément rotatif au point ou aux deux ou trois points spécifique(s) (A, B) ;
c. écriture d'une valeur de sortie à partir d'une carte de programme connectée depuis l'extérieur, correspondant à chacun du point ou des deux ou trois points spécifique(s) (A, B) de l'élément rotatif dans les circuits imprimés à effet Hall (31, 32) ;
d. retrait du codeur et de la carte de programme ; et
e. calcul d'une valeur de sortie de l'unité de détection de type sans contact (30) au nouveau point correspondant à une autre rotation de la partie d'arbre (13) sur la base de chacune des valeurs de sortie correspondant à chacun du point ou des deux ou trois points spécifique(s) (A, B) fixé(s) temporairement.

2. Procédé de régulation de sortie d'angle de rotation selon la revendication 1, dans lequel la valeur de sortie au nouveau point est calculée sur la base de la valeur de sortie dans le circuit imprimé à effet Hall (31, 32) et d'un gradient prédéfini lui correspondant lorsqu'il existe un point spécifique (A, B) auquel la valeur de sortie correspond.

3. Procédé de régulation de sortie d'angle de rotation selon la revendication 1, dans lequel :
l'étape b. et l'étape c. sont répétées deux fois de suite pour générer et écrire des valeurs de sortie correspondant à deux points spécifiques fixés temporairement (A, B) ; et
la valeur de sortie au nouveau point est calculée sur la base d'une interpolation linéaire entre les deux points spécifiques fixés temporairement (A, B).

4. Procédé de régulation de sortie d'angle de rotation selon la revendication 1, dans lequel :
l'étape b. et l'étape c. sont répétées trois fois de suite pour générer et écrire des valeurs de sortie correspondant à trois points spécifiques fixés temporairement (A, B, C) ; et
la valeur de sortie au nouveau point est calculée sur la base d'une interpolation linéaire approximative basée sur les trois points spécifiques fixés temporairement.

5. Procédé de régulation de sortie d'angle de rotation selon la revendication 1, dans lequel l'étape b. et l'étape c. sont répétées trois fois de suite pour générer et écrire des valeurs de sortie correspondant à trois points spécifiques fixés temporairement (A, B, C) ; et
la valeur de sortie au nouveau point est basée sur une interpolation linéaire réalisée entre deux points spécifiques fixés temporairement adjacents respectifs parmi les trois points spécifiques fixés temporairement.

6. Procédé de régulation de sortie d'angle de rotation selon l'une quelconque des revendications 2 à 5, dans lequel la partie d'arbre (13) de l'élément rotatif est un arbre rotatif d'un papillon des gaz dans un moteur à combustion interne ;
l'un du point ou des deux ou trois points spécifique(s) fixé(s) temporairement est réglé dans une position à faible ouverture ou dans une position complètement fermée du papillon des gaz.

7. Procédé de réglage d'angle de rotation selon l'une quelconque des revendications 2 à 5, dans lequel :
la partie d'arbre (13) de l'élément rotatif est un arbre rotatif d'un papillon des gaz dans un moteur à combustion interne ;
l'un du point ou des deux ou trois points spécifique(s) fixé(s) temporairement est réglé dans une position complètement fermée du papillon des gaz et renvoyé vers un côté ouvert selon un degré prédéterminé d'ouverture du papillon des gaz à partir d'une position d'ouverture initiale en tant que position de butée mécanique au-delà d'une position d'écoulement minimale.

8. Procédé de régulation de sortie d'angle de rotation selon l'une quelconque des revendications 2 à 5, dans lequel la partie d'arbre (13) de l'élément rotatif est un arbre rotatif d'un papillon des gaz dans un moteur à combustion interne ; et
l'un du point ou des deux ou trois points spécifique(s) fixé(s) temporairement est réglé dans une position d'ouverture initiale du papillon des gaz dans un état de marche (ON) d'un commutateur d'allumage dans le moteur à combustion interne, la position d'ouverture initiale servant de position d'apprentissage, la position d'ouverture initiale étant actualisée à chaque démarrage du moteur à combustion interne, la valeur de sortie au nouveau point correspondant à une autre rotation de la partie d'arbre (13) étant corrigée et calculée pour correspondre à la position d'ouverture initiale.
